# EUROPÄISCHE PATENTSCHRIFT

(11) **EP 2 915 615 B1**
(45) Veröffentlichungstag und Bekanntmachung des Hinweises auf die Patenterteilung: **07.12.2016**
(21) Anmeldenummer: 15157446.4
(22) Anmeldetag: 03.03.2015
(51) Int. Cl.: B23C 5/10

(54) **Schaftfräser**
End mill
Fraise à queue

(30) Priorität: 07.03.2014 DE 102014103103
(43) Veröffentlichungstag der Anmeldung: 09.09.2015
(73) Patentinhaber: Gühring KG, 72458 Albstadt (DE)
(72) Erfinder: Gall, Clemens, 96237 Ebersdorf (DE); Mutlu, Murat, 09111 Chemnitz (DE); Weimann, Stefan, 96114 Hirschaid (DE)
(74) Vertreter: Winter, Brandl, Fürniss, Hübner, Röss, Kaiser, Polte - Partnerschaft mbB

(56) Entgegenhaltungen:
- DE-A1-102010 025 148
- DE-B4- 10 325 600
- US-A- 2 795 979
- US-A1- 2010 226 726
- US-B2- 8 475 088
- "Pilotfräser: Pilotieren, Bohren, Anspiegeln - mit nur einem Werkzeug", , 2013, Seiten 1-2, XP055203093, Albstadt (DE) Gefunden im Internet: URL:http://www.guehring.de/pdf/Pilotfraese r_2013_de.pdf [gefunden am 2015-07-17]

## Beschreibung

Die Erfindung bezieht sich auf einen Schaftfräser gemäß dem Oberbegriff des Patentanspruchs 1.

Derartige Schaftfräser sind grundsätzlich bekannt, beispielsweise durch die DE 103 25 600 B4 oder durch den Prospekt "Pilotfräser" der Anmelderin aus dem Jahr 2013.

Fräswerkzeuge dieser Art werden in jüngerer Zeit dann eingesetzt, wenn Bohrungen, einschließlich Tieflochbohrungen, schräg zu einer Werkstückoberfläche eingebracht werden müssen. In diesem Fall wird der Stirnfräser dazu herangezogen, die Werkstückoberfläche "anzuspiegeln" bzw. mit einer Pilotbohrung zu versehen, welche beim nachfolgenden Bohrungsbearbeitungsvorgang als Führung für das Bohrwerkzeug, beispielsweise für ein Tieflochbohrwerkzeug dient.

Mit zunehmender Verbesserung der Werkstoffe für die zum Einsatz kommenden Werkzeuge ist es auch gelungen, die Qualität derartiger Pilotbohrungen und Anspiegelungsflächen zu verbessern. Mit verbesserter Steifigkeit der Werkzeuge, was beispielsweise durch den Einsatz von Hartstoffen wie zum Beispiel Vollhartmetall (VHM) gelingt, wird die Formgenauigkeit der Pilotbohrungen auch dann, wenn sie unter einem relativ großen Winkel zur Oberflächen-Normalen in das Werkstück eingebracht wird, relativ gut. Weitere Verbesserungen der Bearbeitungsqualität hinsichtlich Lage, Formgenauigkeit und Bearbeitungsoberfläche können dadurch erzielt werden, dass die Stirnschneiden zueinander um ungleiche Teilungswinkel versetzt sind (vgl.
DE 103 25 600 B4). Eine weitere Maßnahme besteht darin, den Umfangsschneiden einen negativen Spanwinkel zuzuordnen, um dem Werkzeug genügend Stabilität für die Bearbeitung hochfester und hochzäher Werkstoffe zu geben.

Es hat sich gezeigt, dass es mit den bekannten Geometrien der gattungsgemäßen Stirnfräser oftmals nicht gelingt, die geforderten Formgenauigkeiten der Pilotbohrungen einzuhalten, die inzwischen bei zulässigen Rundheitsabweichungen im Bereich zwischen 3 und 6 µm liegen.

Der Erfindung liegt deshalb die Aufgabe zugrunde, ein gattungsgemäßes Fräswerkzeug zu schaffen, mit dem es gelingt, Pilotbohrungen über deren gesamte Länge mit bislang nicht erreichter Rundheit herzustellen.

Diese Aufgabe wird durch die Merkmale des Patentanspruchs 1 gelöst.

Erfindungsgemäß wurde erkannt, dass es durch die Aufgabe der Punktsymmetrie der über Mitte schneidenden Stirnschneiden in Kombination mit einem von 90° verschiedenen Teilungswinkelversatz zwischen den Stirnschneiden und den dazwischen liegenden weiteren Stirnschneiden gelingt, Eigenschwingungen des Werkzeugs in der Weise zurück zu drängen, dass höchste Rundheitsgenauigkeiten von Pilotbohrungen selbst dann eingehalten werden können, wenn die Pilotbohrung unter einem verhältnismäßig großen Winkel zur Werkstück-Normalen eingebracht werden. Erfindungsgemäß sind sämtliche Teilungswinkel der Stirnschneiden voneinander unterschiedlich. Überraschenderweise hat sich allerdings gezeigt, dass die durch die erfindungsgemäße ungleiche Teilung der Stirnschneiden hervorgerufene ungleiche Schneidenbelastung bedingt durch die Kombination mit den weiteren Geometrieparametern der Schneidenanordnung und -Gestaltung sogar positiv zur Verbesserung der Bohrungsrundheit genutzt werden kann. Selbstverständlich müssen die Schneiden ausreichend stabil sein, um den Beanspruchungen Stand zu halten. Dies ist jedoch durch geeignete Auswahl des Werkstoffs für den Schneidteil des Fräsers ohne weiteres beherrschbar, beispielsweise dann, wenn in diesem Bereich ein Hartstoff wie zum Beispiel Vollhartmetall oder ein Cermet-Werkstoff, zum Einsatz kommt. Besonders vorteilhaft ist es, wenn das gesamte Werkzeug aus einem Hartstoff, wie zum Beispiel Vollhartmetall besteht, weil auf diese Weise auch die Steifigkeit des Schafts zur Verbesserung der Bohrungsqualität beiträgt.

Mit den Weiterbildungen nach den Ansprüchen 2 bzw. 4 ergibt sich eine besonders einfache Geometrie für die Stirnschneiden.

Die Weiterbildung der Ansprüche 3 bzw. 5 führt dazu, dass die Umfangsschneiden einen leicht positiven Spanwinkel erhalten. Diese Maßnahme ist insbesondere für die Anfangsphase des Einbringens der Pilotbohrung schräg zur Werkstückoberfläche von besonderer Bedeutung, da in diesem Moment die Belastung der Umfangsschneiden möglichst gering gehalten werden soll, um übermäßige Auslenkungen der Fräserachse zu vermeiden.

Mit der Weiterbildung des Patentanspruchs 6 wird die Arbeitsgenauigkeit des Schaftfräsers weiter verbessert. Durch die Neigung zumindest der ersten und der zweiten Stirnschneide, also der beiden über Mitte schneidenden Stirnschneiden, kann diesen Stirnscheiden eine weitere Zentrierungsfunktion übertragen werden. Versuche der Anmelderin haben ergeben, dass ein Zusammenhang zwischen dem Neigungswinkel und der Ungleichheit der Teilung der Stirnschneiden besteht. Je größer der Neigungswinkel der über Mitte laufenden Stirnschneiden ist, desto ungleicher kann die Teilung der Stirnschneiden sein. Es hat sich gezeigt, dass bereits ein Neigungswinkel von 1° genügt, um auf die Rundheit der Pilotbohrung einen spürbaren Einfluss auszuüben. Besonders bevorzugt beträgt die Neigung 1,5°.

Wenn auch die weiteren Stirnschneiden zueinander ebenfalls unter einem negativen Zentrierwinkel geneigt sind, kann der zentrierende Effekt der Stirnschneiden zusätzlich verstärkt werden. Für den Fall, dass gemäß Patentanspruch 7 eine derartige Neigung der weiteren Stirnschneiden gewählt wird, ist es von Vorteil, den Neigungswinkel dieser Stirnschneiden an denjenigen der über Mitte gehenden Stirnschneiden anzugleichen.

Grundsätzlich ist es möglich, die Schneidenecken der Stirnschneiden in unterschiedlichen Transversalebenen anzuordnen. Eine besonders einfache Herstellbarkeit des Schaftfräsers ergibt sich allerdings dann, wenn gemäß Anspruch 9 alle Schneidenecken der Stirnschneiden in einer gemeinsamen auf der Fräserachse senkrecht stehenden Transversalebene liegen.

Mit der Weiterbildung des Anspruchs 8 ergibt sich der Vorteil, dass die Pilotbohrung mit einer senkrecht zur Bohrungsachse liegenden Ring-Planfläche gefertigt werden kann, was oftmals für die weitere Bearbeitung bzw. für die Funktion der Bohrung im Werkstück von Vorteil ist.

Die erfindungsgemäße ungleiche Teilung der Stirnschneiden kann auf verschiedene Art und Weise erzeugt werden. Es ist beispielsweise möglich, die Drallwinkel der einzelnen Umfangsschneiden aneinander anzugleichen, die Spannuten jedoch in der ungleichen Teilung in den Fräserkörper einzubringen. Eine andere Variante besteht darin, in einem bestimmten Abstand zur Fräserspitze von einer gleichmäßigen bzw. punktsymmetrischen Verteilung der Spannuten auszugehen und die Drallwinkel der einzelnen Spannuten unterschiedlich auszugestalten. Auf diese Weise wird die erfindungsgemäße Teilung der Stirnschneiden automatisch erzielt.

Mit den Weiterbildungen der Ansprüche 13 und 14 wird das Schnittverhalten des Schaftfräsers an den Stellen verbessert, an denen die Schnittgeschwindigkeit besonders gering ist. Mit diesen Maßnahmen gelingt ist, die Vorschubkraft des Schaftfräsers bei der Anbringung einer Pilotbohrung erheblich zu verringern.

Weitere vorteilhafte Ausgestaltungen sind Gegenstand der übrigen Unteransprüche.

Nachstehend werden anhand schematischer Zeichnungen Ausführungsbeispiele der Erfindung näher erläutert. Es zeigen:
Fig. 1 eine schematische Ansicht eines Schaftfräsers in einer typischen Positionierung bezüglich eines Werkstücks zur Vorbereitung einer Einbringung einer Pilotbohrung;
Fig. 2 eine Stirnansicht eines erfindungsgemäßen Schaftfräsers;
Fig. 3 die Ansicht gemäß "III" in Fig. 2;
Fig. 4 die Ansicht gemäß "IV" in Fig. 2;
Fig. 5 die Einzelheit "V" in Fig. 2;
Fig. 6 eine schematische Ansicht einer mit einem erfindungsgemäßen Werkzeug herstellbaren Pilotbohrung; und
Fig. 7 eine der Fig. 6 entsprechende schematische Ansicht einer Pilotbohrung, die mit einem etwas modifizierten Werkzeug gemäß Fig. 2 bis 5 herstellbar ist.

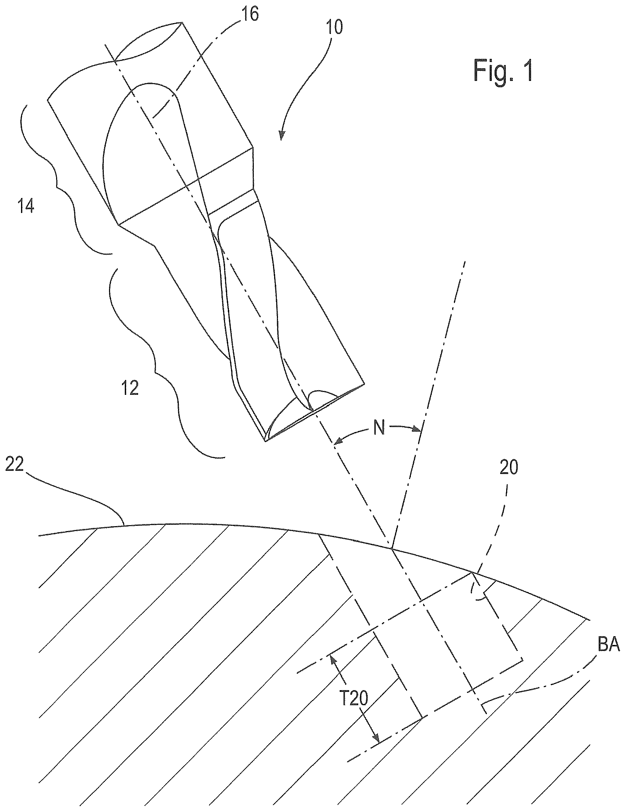

In Fig. 1 ist mit dem Bezugszeichen 10 ein Schaftfräser bezeichnet, der neben herkömmlichen Fräsoperationen auch zum Aufweiten von Bohrungen oder aber auch zum Pilotieren und Anspiegeln, insbesondere schräger Werkstückflächen Verwendung finden soll.

Mit gestrichelten Linien ist in Figur 1 eine derartige Pilotbohrung 20 bezeichnet, die unter einem Neigungswinkel N zur Werkstückoberfläche 22 geneigt ist. Je größer der Neigungswinkel N ist, desto schwieriger wird es, die Pilotbohrung mit ausreichend hoher Genauigkeit hinsichtlich Ausrichtung der Bohrungsachse und bezüglich Rundheit insbesondere über die gesamte voll ausgebildete Bohrungstiefe T20 einzuhalten. Die Formgenauigkeit der Pilotbohrung 20 ist deshalb oftmals erforderlich, weil zur Ausbildung tieferer Bohrungen die Pilotbohrung als Führung für das nachfolgend zum Einsatz kommende Bohrwerkzeug herangezogen wird. Deshalb ist es beispielsweise bei einem Bohrungsdurchmesser von 10 mm mittlerweile erforderlich, die Rundheitsabweichungen über die gesamte Länge der Pilotbohrung 20 im Bereich zwischen 3 und 6 µm zu halten.

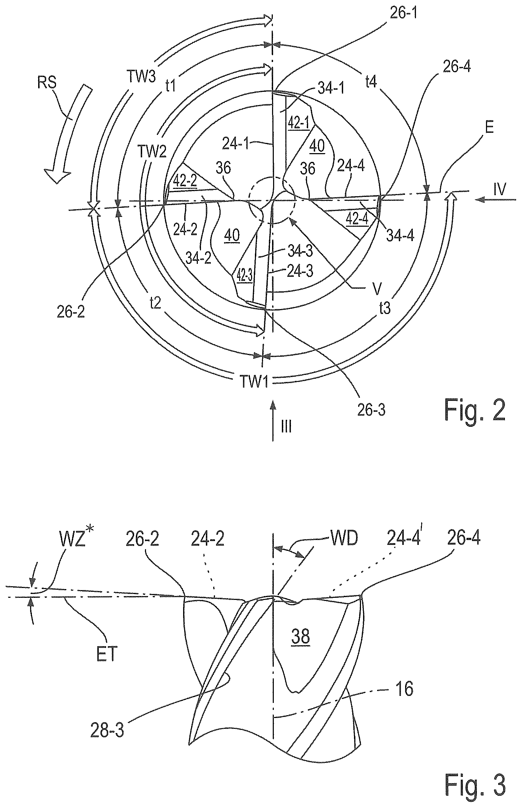

Der Schaftfräser 10 hat eine Achse 16, ein Schneidteil 12 und einen Schaft 14 und ist im Einzelnen so ausgebildet, wie dies anhand der Figuren 2 bis 5 näher erläutert wird.

Wie aus Fig. 2 ersichtlich, hat der Schaftfräser 4 geradlinige Stirnschneiden 24-1, 24-2, 24-3 und 24-4 mit den Schneidenecken 26-1 bis 26-4, von denen jeweils Umfangsschneiden 28-1 bis 28-4 ausgehen. Zwischen den Umfangsschneiden 28-1 bis 28-4 sind Spannuten 30 ausgebildet. Im gezeigten Ausführungsbeispiel verlaufen die Umfangsschneiden 28-1 bis 28-4 wendelförmig, wobei in Fig. 3 der Drallwinkel WD für die Umfangsschneide 28-3 dargestellt ist. Es soll jedoch bereits an dieser Stelle hervorgehoben werden, dass die Erfindung auch bei gerade genuteten Schaftfräsern Anwendung finden kann.

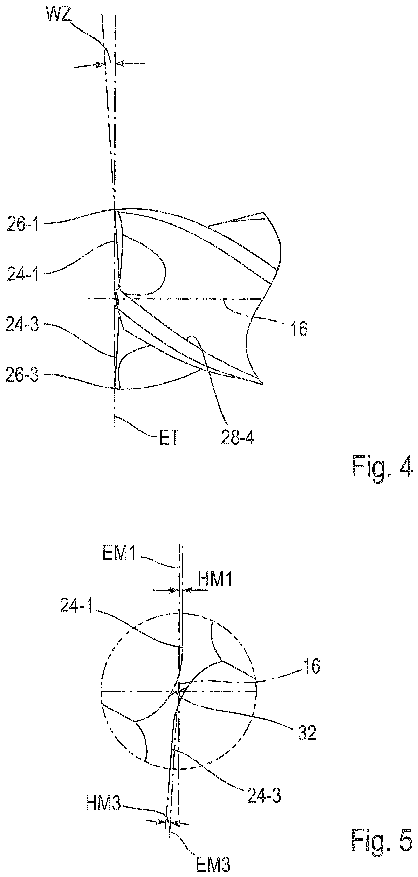

Die Stirnschneiden 24-1 und 24-3 erstrecken sich sozusagen "über Mitte" und sie sind lediglich über eine Freiflächen-Verschneidungslinie 32 (siehe Einzelheit der Fig. 5) voneinander abgegrenzt. Mit dem Bezugszeichen 34-1 und 34-3 sind die Freiflächen der Stirnschneiden 24-1 und 24-3 bezeichnet.

In Schnittrichtung zwischen den Stirnschneiden 20-1 und 24-3 befinden sich die weiteren Stirnschneiden 24-2 und 24-4. Diese Stirnschneiden enden vor Mitte am Punkt 36, da sie durch eine Ausspitzung 38 der gegen die Schnittrichtung benachbarten Stirnschneide, mit der gleichzeitig der Verlauf der über Mitte schneidenden Stirnschneide 24-1 und 24-3 korrigiert wird, abgetragen ist. Die Stirnschneiden 24-2 und 24-4 sind um einen ersten Teilungswinkel TW1 von 180° zueinander versetzt.

Die Besonderheit des Schaftfräsers gemäß Fig. 2 bis 5 besteht darin, dass für die Lage der Stirnschneiden ganz besondere Teilungsverhältnisse vorliegen. Im Einzelnen ist die Stirnschneide 24-3 zur Stirnschneide 24-1 in Schnittrichtung RS um einen zweiten Teilungswinkel TW2 versetzt, der im Bereich zwischen 173 und 177°, vorzugsweise zwischen 174° und 176°, beispielsweise bei 175° liegt. Ferner liegt die in Schnittrichtung zur Stirnschneide 24-1 nächste Stirnschneide 24-2 zur Stirnschneide 24-1 unter einem dritten Teilungswinkel TW3 versetzt, der im Bereich zwischen 90° und 94°, vorzugsweise im Bereich zwischen 91° und 93°, beispielsweise bei 92° liegt.

Damit ergibt sich eine Stirnschneidenteilung mit Teilungswinkeln t1, t2, t3 und t4, wobei die Winkel t1 bis t4 sämtlich unterschiedlich sind. Beispielsweise beträgt die Winkelteilung t1 92°, die Winkelteilung t2 83°, die Winkelteilung t3 97° und die Winkelteilung t4 88°.

Aus der Fig. 2 und insbesondere aus der Einzelheit gemäß Fig. 5 ist ferner erkennbar, dass die Stirnschneiden 24-1 und 24-3 jeweils parallel zu einer durch die Fräserachse 16 verlaufende Medianebene EM1 bzw. EM3 verlaufen. Besonders bevorzugt liegt die jeweilige Stirnschneide 24-1 bzw. 24-3 um ein kleines Maß HM1 bzw. HM3 in Schnittrichtung hinter der zugehörigen Medianebene EM1 bzw. EM3, wodurch sich an der zugehörigen Umfangsschneide 38-1 bzw. 38-3 ein leicht positiver Spanwinkel ergibt. Es hat sich gezeigt, dass - je nach Nenndurchmesser des Schaftfräsers - bereits Versetzungsmaße HM1 bzw. HM3 in der Größenordnung von einigen 1/10-tel mm genügen, um positiven Einfluss auf die auftretenden Schnittkräfte zu nehmen.

In ähnlicher Weise wie die über Mitte schneidenden Stirnschneiden 24-1 und 24-3 verlaufen auch die Stirnschneiden 24-2 und 24-4 geradlinig und parallel zu einer gemeinsamen durch die Fräserachse 16 verlaufenden Medianebene, die in den Figuren nicht näher dargestellt ist, die aber im wesentlichen mit der in Fig. 2 dargestellten Ebene E zusammenfällt, in der die Stirnschneiden 24-2 und 24-4 liegen. Auch bezüglich dieser Stirnschneiden 24-2 und 24-4 kann vorgesehen sein, dass sie um ein geringes Maß HM in Schnittrichtung hinter dieser Medianebene E liegen.

Durch die vorstehend beschriebene Ausgestaltung mit den unterschiedlichen Winkelteilungen t1 bis t4 und der besonderen von 180° abweichenden Winkelteilung der über Mitte schneidenden Stirnschneiden 24-1 und 24-3 lässt sich das Eigenschwingverhalten des Schaftfräsers in vorteilhafter Weise derart eindämmen, dass Pilotbohrungen mit extrem guter Rundheit herstellbar sind, und zwar selbst dann, wenn der Neigungswinkel N (siehe Figur 1) Werte bis über 30° annimmt.

Zur zusätzlichen Verbesserung der Form- und Lagegenauigkeit der Pilotbohrung weist der anmeldungsgemäße Schaftfräser die weitere folgende Besonderheit auf:

Beide über Mitte schneidenden Stirnschneiden 24-1 und 24-3 verlaufen vom zugehörigen Schneideneck 26-1 bzw. 26-3 ausgehend bezüglich einer auf der Fräserachse 16 senkrecht stehenden Transversalebene ET (siehe Fig. 4) jeweils unter einem negativen Zentrierwinkel WZ, der im Bereicht zwischen 0,5° und 3,5°, vorzugsweise zwischen 1° und 3°, beispielsweise um 1,5° in Richtung Fräserschaft geneigt verlaufen.

Wie aus Fig. 3 ersichtlich, ist bei der dargestellten Ausführungsform nach den Figuren 2 bis 5 die Anordnung der Stirnschneiden 24-2 und 24-4 ähnlich getroffen, das heißt sie sind zueinander ebenfalls so zueinander geneigt, dass sie mit der auf der Fräserachse 16 senkrecht stehenden Transversalebene ET einen Zentrierwinkel WZ* einschließen, der in der gleichen Größenordnung wie der Zentrierwinkel WZ ist, also im Bereich von 0,5° und 3,5° liegt.

Zur Vereinfachung der Herstellung liegen die Schneidenecken 26-1 bis 26-4 in einer gemeinsamen Transversalebene ET.

Auch die verkürzten Stirnschneiden 24-2 und 24-4 sind durch eine Ausspitzung 40 korrigiert, sodass sie geradlinig verlaufen.

Vorzugsweise sind die Ausspitzungen 38 und 40 so eingebracht, dass sich über die gesamte Länge der Stirnschneiden ein positiver Spanwinkel ergibt, der im Bereich zwischen 0 und 5°, vorzugsweise zwischen 0 und 3° liegt.

Wie ferner aus der Fig. 2 ersichtlich ist, haben sämtliche Stirnschneiden 24-1 bis 24-4 zwei Freiflächen, wobei sich an eine erste Freifläche 34-1 bis 34-4 eine dazu im Winkel verlaufende zweite Freifläche 42-1 bis 42-4 anschließt.

Die in Fig. 2 gezeigte erfindungsgemäße Teilung der Stirnschneiden 24-1 bis 24-4 lässt sich auf verschiedene Art und Weise erreichen. Eine Möglichkeit besteht darin, die Spannuten in der gleichen Teilung über ihre gesamte Länge im Werkzeug auszubilden. Eine andere Möglichkeit besteht darin, wendelförmige Spannuten so auszubilden, dass in einer auf der Bohrerachse 16 senkrecht stehenden Transversalebene betrachtet, die vorzugsweise im Bereich des Schneidteils 12 liegt, die einander diametral gegenüberliegenden Spannuten punktsymmetrisch ausgebildet sind und dass die Drallwinkel der Umfangsschneiden 28-1 und 28-3 unterschiedlich gewählt werden, wobei gleichzeitig der Drallwinkel der Umfangsschneiden 28-2 und 28-4 unterschiedlich zum Drallwinkel der Umfangsschneiden 28-1 und 28-3 festgelegt wird. Beispielsweise wird also der Drallwinkel der Umfangsschneide 28-1 größer oder kleiner als der Drallwinkel der Umfangsschneide 28-3 gewählt. Ferner wird der Drallwinkel der Umfangsschneiden 28-2 und 28-4 größer oder kleiner als der Drallwinkel der Umfangsschneiden 28-1 und 28-3 gewählt.

Vorzugsweise besteht der Schaftfräser 10 insgesamt aus einem hochfesten Stoff, wie zum Beispiel HSS oder HSSE oder aus einem Hartstoff, wie zum Beispiel aus Vollhartmetall oder einem Cermet-Werkstoff. Zur Verbesserung der Standzeit kann es von Vorteil sein, den Schaftfräser zumindest im Bereich seines Schneidteils 12 mit einer Beschichtung, insbesondere mit einer PVD-Beschichtung auszustatten.

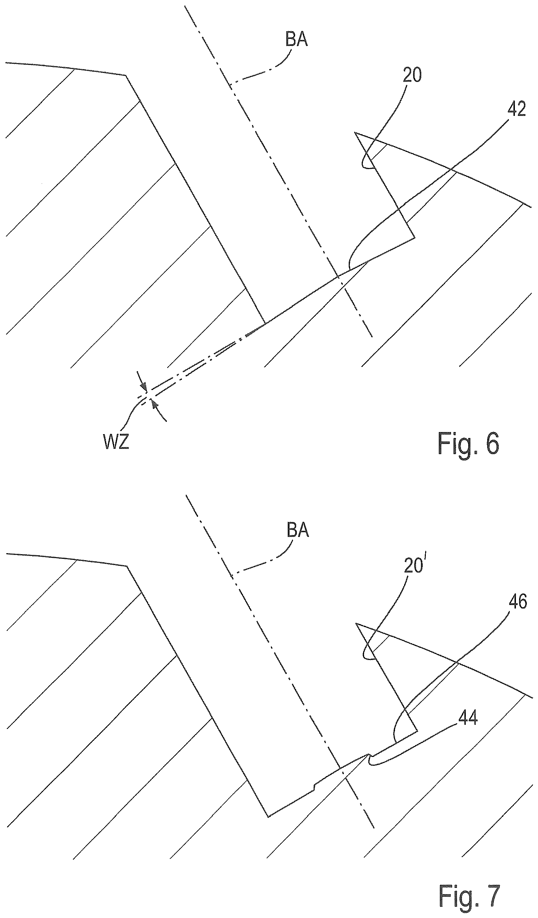

In Fig. 6 ist schematisch gezeigt, welche Form die mit einem erfindungsgemäßen Schaftfräser 10 gefertigte Pilotbohrung 20 hat. An die zylindrische Bohrungswand schließt sich ein Bohrungsgrund 42 in Form eines Kegels an, wobei der Kegelwinkel durch den jeweils kleineren Neigungswinkel WZ bzw. WZ* der Stirnschneiden 24-1 bis 24-4 bestimmt ist.

Gemäß einer weiteren Variante des erfindungsgemäßen Schaftfräsers, welche in Fig. 3 durch die gepunktete Linie mit den Stirnschneiden 24-2' und 24-4' angedeutet ist, beträgt der Winkel WZ* in diesem Fall 0°, das heißt die Stirnschneiden 24-2' und 24-4' liegen in der durch die Schneidenecken 26-1 bis 26-4 verlaufenden Transversalebene ET.

Mit dieser Gestaltung ergibt sich die in Fig. 7 schematisch dargestellte Kontur der Pilotbohrung 20'. der Bohrungsgrund erhält in diesem Fall eine etwas andere Form. Im Zentrum liegt nach wie vor eine durch den geneigten Verlauf der über Mitte schneidenden Stirnschneiden 24-1 und 24-3 bestimmte Konusform vor. An diesen Konus schließt sich über eine Stufe 44 ein Ringflächenabschnitt 46 an, der senkrecht auf der Bohrungsachse BA steht.

Es wurden Versuche mit Schaftfräsern durchgeführt, die entsprechend der vorstehend beschriebenen Ausgestaltung im gesamten Spektrum der Teilung und der Neigungswinkel WZ variiert wurden. Die Versuche haben gezeigt, dass Pilotbohrungen mit einer voll ausgeprägten Tiefe T20 im Bereich von 0,5 bis 1 x D (D bezeichnet den Nenndurchmesser des Schaftfräsers) ausgebildet werden konnten, wobei Formabweichungswerte der Rundheit an der tiefsten Stelle und an der Werkstückoberfläche nächsten Stelle zwischen 3 µm und 4 µm lagen. Diese Werte konnten unabhängig davon erzielt werden, ob nass oder trocken (MMS-Technologie) gearbeitet wurde.

Die Erfindung schafft somit einen Schaftfräser mit vier an einer Stirnseite angeordneten geradlinigen Stirnschneiden und einer entsprechenden Anzahl von jeweils am äußeren Schneideneck der Stirnschneiden ausgehenden Umfangsschneiden, die durch Spannuten voneinander getrennt sind. Eine der Stirnschneiden geht über eine Freiflächen-Verschneidungslinie in eine zweite Stirnschneide über. Die in Schnittrichtung dazwischen liegenden weiteren Stirnschneiden, die um einen ersten Teilungswinkel von 180° zueinander versetzt sind, enden vor Mitte. Um den Schaftfräser in besonders vorteilhafter Weise für die Einbringung von form- und lagegenauen Pilotbohrungen bzw. zum Anspiegeln von gekrümmten Werkstückoberflächen verwenden zu können, ist die erste Stirnschneide zur zweiten Stirnschneide in Schnittrichtung um einen zweiten Teilungswinkel versetzt, der im Bereich zwischen 173° und 177°, vorzugsweise zwischen 174° und 176° liegt, wobei die erste Stirnschneide zu der in Schnittrichtung nächsten weiteren Stirnschneide um einen dritten Teilungswinkel versetzt ist, der im Bereich zwischen 90° und 94°, vorzugsweise im Bereich zwischen 91° und 93° liegt.

## Patentansprüche

1. Schaftfräser mit vier an einer Stirnseite angeordneten geradlinigen Stirnschneiden (24-1 bis 24-4) und einer entsprechenden Anzahl von jeweils am äußeren Schneideneck (26-1 bis 26-4) der Stirnschneiden (24-1 bis 24-4) ausgehenden Umfangsschneiden (28-1 bis 28-4), die durch Spannuten (30) voneinander getrennt sind, wobei eine der Stirnschneiden (24-1) über eine Freiflächen-Verschneidungslinie (32) in eine zweite Stirnschneide (24-3) übergeht und die in Schnittrichtung dazwischen liegenden weiteren Stirnschneiden (24-2, 24-4), die um einen ersten Teilungswinkel (TW1) von 180° zueinander versetzt sind, vor Mitte (Punkt 36) enden, **dadurch gekennzeichnet, dass** die zweite Stirnschneide (24-3) zur ersten Stirnschneide (24-1) in Schnittrichtung (RS) um einen zweiten Teilungswinkel (TW2) versetzt ist, der im Bereich zwischen 173 und 177°, vorzugsweise zwischen 174° und 176° liegt, und dass die erste Stirnschneide (24-1) zu der in Schnittrichtung (RS) nächsten weiteren Stirnschneide (24-2) um einen dritten Teilungswinkel (TW3) versetzt ist, der im Bereich zwischen 90° und 94°, vorzugsweise im Bereich zwischen 91° und 93° liegt.

2. Schaftfräser nach Anspruch 1, **dadurch gekennzeichnet, dass** die erste und die zweite Stirnschneide (24-1, 24-3) jeweils parallel zu einer zugeordneten, durch die Fräserachse (16) verlaufende Medianebene (EM1, EM3) verlaufen.

3. Schaftfräser nach Anspruch 2, **dadurch gekennzeichnet, dass** die erste und die zweite Stirnschneide (24-1, 24-3) in Schnittrichtung (RS) jeweils um ein geringes Maß (HM1, HM3) hinter der zugehörigen Medianebene (EM1, EM3) liegen.

4. Schaftfräser nach einem der Ansprüche 1 bis 3, **dadurch gekennzeichnet, dass** die zwischen der ersten (24-1) und der zweiten Stirnschneide (24-3) liegenden weiteren Stirnschneiden (24-2, 24-4) parallel zu einer weiteren, durch die Fräserachse (16) verlaufende Medianebene (E) verlaufen.

5. Schaftfräser nach Anspruch 4, **dadurch gekennzeichnet, dass** die weiteren Stirnschneiden (24-2, 24-4) in Schnittrichtung um ein geringes Maß hinter der weiteren Medianebene (E) liegen.

6. Schaftfräser nach einem der Ansprüche 1 bis 5, **dadurch gekennzeichnet, dass** die erste und die zweite Stirnschneide (24-1, 24-3) vom Schneideneck (26-1, 26-3) ausgehend bezüglich einer auf der Fräserachse (16) senkrecht stehenden Transversalebene (ET) jeweils unter einem negativen Zentrierwinkel (WZ) im Bereich zwischen 0,5° und 3,5°, vorzugsweise zwischen 1° und 3°, in Richtung Fräserschaft (14) geneigt verlaufen.

7. Schaftfräser nach Anspruch 6, **dadurch gekennzeichnet, dass** die weiteren Stirnschneiden (24-2, 24-4) zueinander ebenfalls unter einem negativen Zentrierwinkel (WZ*) geneigt sind.

8. Schaftfräser nach einem der Ansprüche 1 bis 6, **dadurch gekennzeichnet, dass** die weiteren Stirnschneiden (24-2, 24-4) in einer gemeinsamen auf der Fräserachse (16) senkrecht stehenden Transversalebene (ET) liegen.

9. Schaftfräser nach einem der Ansprüche 1 bis 8, **dadurch gekennzeichnet, dass** die Schneidenecken (26-1 bis 26-4) aller Stirnschneiden (24-1 bis 24.4) in einer gemeinsamen auf der Fräserachse (16) senkrecht stehenden Transversalebene (ET) liegen.

10. Schaftfräser nach einem der Ansprüche 1 bis 9, **dadurch gekennzeichnet, dass** die Drallwinkel (WD) der einzelnen Umfangsschneiden (28) gleich sind.

11. Schaftfräser nach einem der Ansprüche 1 bis 9, **dadurch gekennzeichnet, dass** die Drallwinkel (WD) der der ersten und der zweiten Stirnschneide (24-1, 24-3) zugeordneten Umfangsschneiden (28-1, 28-3) unterschiedlich sind.

12. Schaftfräser nach Anspruch 11, **dadurch gekennzeichnet, dass** die Drallwinkel (WD) der den weiteren Stirnschneiden (24-2, 24-4) zugeordneten Umfangsschneiden (28-2, 28-4) sich von zumindest einem der Drallwinkel, welcher den der ersten und der zweiten Stirnschneide (24-1, 24-3) zugeordneten Umfangsschneiden (28-1, 28-3) zugeordnet ist, unterscheiden.

13. Schaftfräser nach einem der Ansprüche 1 bis 12, **dadurch gekennzeichnet, dass** die Stirnschneiden (24-1 bis 24-4) durch eine Ausspitzung (38, 40) des Fräserkerns korrigiert sind.

14. Schaftfräser nach einem der Ansprüche 1 bis 13, **dadurch gekennzeichnet, dass** die Stirnschneiden (24-1 bis 24-4) bis in den Bereich des Fräserzentrums einen positiven Spanwinkel aufweisen, der im Bereich zwischen 0 und 3° liegt.

15. Schaftfräser nach einem der Ansprüche 1 bis 14, **dadurch gekennzeichnet, dass** er zumindest im Bereich eines Schneidabschnitts aus einem Hartstoff, insbesondere Vollhartmetall (VHM) besteht.

16. Schaftfräser nach einem der Ansprüche 1 bis 15, **dadurch gekennzeichnet, dass** er zumindest im Bereich eines Schneidabschnitts mit einer Beschichtung, insbesondere einer PVD-Beschichtung, ausgestattet ist.

17. Verwendung des Schaftfräsers nach einem der Ansprüche 1 bis 16 zum Pilotieren und Anspiegeln, insbesondere von zur Fräserachse geneigten Werkstückoberflächen (22).

## Claims

1. End mill comprising four straight end cutting edges (24-1 to 24-4) arranged on an end face and a corresponding number of circumferential cutting edges (28-1 to 28-4) that each proceed from the outer nose (26-1 to 26-4) of the end cutting edges (24-1 to 24-4) and are separated from one another by flutes (30), one of the end cutting edges (24-1) passing over a flank intersecting line (32) into a second cutting edge (24-3) and the other end cutting edges (24-2, 24-4), which lie between said two cutting edges in the cutting direction and are offset relative to one another by a first angular pitch (TW1) of 180°, ending before the middle (point 36), **characterised in that** the second end cutting edge (24-3) is offset relative to the first end cutting edge (24-1) in the cutting direction (RS) by a second angular pitch (TW2) in the range between 173 and 177°, preferably between 174° and 176°, and **in that** the first end cutting edge (24-1) is offset relative to the additional end cutting edge (24-2) that is next in the cutting direction (RS) by a third angular pitch (TW3) in the range between 90° and 94°, preferably in the range between 91° and 93°.

2. End mill according to claim 1, **characterised in that** the first and second end cutting edges (24-1, 24-3) each extend in parallel with an associated median plane (EM1, EM3) that extends through the milling axis (16).

3. End mill according to claim 2, **characterised in that** the first and second end cutting edges (24-1, 24-3) each lie a small distance (HM1, HM3) behind the associated median plane (EM1, EM3) in the cutting direction (RS).

4. End mill according to any one of claims 1 to 3, **characterised in that** the additional end cutting edges (24-2, 24-4) between the first (24-1) and the second end cutting edge (24-3) extend in parallel with an additional median plane (E) that extends through the milling axis (16).

5. End mill according to claim 4, **characterised in that** the additional end cutting edges (24-2, 24-4) lie a small distance behind the additional median plane (E) in the cutting direction.

6. End mill according to any one of claims 1 to 5, **characterised in that** the first and the second end cutting edge (24-1, 24-3) each extend from the nose (26-1, 26-3) in the direction of the milling shank in a manner inclined by a negative dish angle (WZ) in the range between 0.5° and 3.5°, preferably between 1° and 3°, with respect to a transverse plane (ET) that is perpendicular to the milling axis (16) .

7. End mill according to claim 6, **characterised in that** the additional end cutting edges (24-2, 24-4) are also inclined relative to one another by a negative dish angle (WZ*).

8. End mill according to any one of claims 1 to 6, **characterised in that** the additional end cutting edges (24-2, 24-4) lie in a common transverse plane (ET) that is perpendicular to the milling axis (16).

9. End mill according to any one of claims 1 to 8, **characterised in that** the noses (26-1 to 26-4) of all the end cutting edges (24-1 to 24-4) lie in a common transverse plane (ET) that is perpendicular to the milling axis (16).

10. End mill according to any one of claims 1 to 9, **characterised in that** the angles of twist (WD) of the individual circumferential cutting edges (28) are identical.

11. End mill according to any one of claims 1 to 9, **characterised in that** the angles of twist (WD) of the circumferential cutting edges (28-1, 28-3) assigned to the first and the second end cutting edge (24-1, 24-3) are different.

12. End mill according to claim 11, **characterised in that** the angles of twist (WD) of the circumferential cutting edges (28-2, 28-4) assigned to the additional end cutting edges (24-2, 24-4) differ from at least one of the angles of twist assigned to the circumferential cutting edges (28-1, 28-3) that are assigned to the first and the second end cutting edge (24-1, 24-3).

13. End mill according to any one of claims 1 to 12, **characterised in that** the end cutting edges (24-1 to 24-4) are corrected by thinning (38, 40) the milling core.

14. End mill according to any one of claims 1 to 13, **characterised in that** the end cutting edges (24-1 to 24-4) have a positive rake as far as in the region of the milling centre, which is in the range between 0 and 3°.

15. End mill according to any one of claims 1 to 14, **characterised in that** said end mill consists of a hard material, in particular solid carbide (SC), at least in the region of a cutting portion.

16. End mill according to any one of claims 1 to 15, **characterised in that** said end mill is provided with a coating, in particular a PVD coating, at least in the region of a cutting portion.

17. Use of the end mill according to any of claims 1 to 16 for pilot milling and spotfacing, in particular of tool surfaces (22) inclined with respect to the milling axis.

## Revendications

1. Fraise à queue avec quatre tranchants frontaux (24-1 à 24-4) en ligne droite agencés au niveau d'un côté frontal et un nombre correspondant de tranchants périphériques (28-1 à 28-4) sortant respectivement au niveau du coin de tranchant (26-1 à 26-4) extérieur des tranchants frontaux (24-1 à 24-4), qui sont séparés par des rainures à copeaux (30) les uns des autres, dans laquelle l'un des tranchants frontaux (24-1) passe par une ligne d'intersection de face de dépouille (32) dans un second tranchant frontal (24-3) et les autres tranchants frontaux (24-2, 24-4) se trouvant au milieu dans le sens de coupe, qui sont en déport les uns des autres d'un premier pas angulaire (TW1) de 180°, se terminent avant le milieu (point 36), **caractérisée en ce que** le second tranchant frontal (24-3) est en déport par rapport au premier tranchant frontal (24-1) dans le sens de coupe (RS) d'un deuxième pas angulaire (TW2) qui se trouve dans la plage entre 173° et 177°, de préférence entre 174° et 176°, et **en ce que** le premier tranchant frontal (24-1) est en déport par rapport à l'autre tranchant frontal (24-2) suivant dans le sens de coupe (RS), d'un troisième pas angulaire (TW3) qui se trouve dans la plage entre 90° et 94°, de préférence dans la plage entre 91° et 93°.

2. Fraise à queue selon la revendication 1, **caractérisée en ce que** les premier et second tranchants frontaux (24-1, 24-3) s'étendent respectivement parallèlement à un plan médian (EM1, EM3) associé s'étendant par l'axe de fraise (16).

3. Fraise à queue selon la revendication 2, **caractérisée en ce que** les premier et second tranchants frontaux (24-1, 24-3) se trouvent dans le sens de coupe (RS) respectivement derrière le plan médian afférent (EM1, EM3) d'une mesure faible (HM1, HM3).

4. Fraise à queue selon l'une quelconque des revendications 1 à 3, **caractérisée en ce que** les autres tranchants frontaux (24-2, 24-4) se trouvant entre le premier (24-1) et le second (24-3) tranchant frontal s'étendent parallèlement à un autre plan médian (E) s'étendant par l'axe de fraise (16).

5. Fraise à queue selon la revendication 4, **caractérisée en ce que** les autres tranchants frontaux (24-2, 24-4) se trouvent dans le sens de coupe derrière l'autre plan médian (E) d'une mesure faible.

6. Fraise à queue selon l'une quelconque des revendications 1 à 5, **caractérisée en ce que** les premier et second tranchants frontaux (24-1, 24-3) s'étendent inclinés en direction de l'arbre de fraise (14) à partir du coin de tranchant (26-1, 26-3) par rapport à un plan transversal (ET) se trouvant perpendiculaire à l'axe de fraise (16) respectivement selon un angle de centrage (WZ) négatif dans la plage entre 0,5° et 3,5°, de préférence entre 1° et 3°.

7. Fraise à queue selon la revendication 6, **caractérisée en ce que** les autres tranchants frontaux (24-2, 24-4) sont aussi inclinés les uns par rapport aux autres selon un angle de centrage négatif (WZ*).

8. Fraise à queue selon l'une quelconque des revendications 1 à 6, **caractérisée en ce que** les autres tranchants frontaux (24-2, 24-4) se trouvent dans un plan transversal (ET) commun se trouvant' perpendiculaire à l'axe de fraise (16).

9. Fraise à queue selon l'une quelconque des revendications 1 à 8, **caractérisée en ce que** les coins de tranchant (26-1 à 26-4) de tous les tranchants frontaux (24-1 à 24-4) se trouvent dans un plan transversal commun (ET) se trouvant perpendiculaire à l'axe de fraise (16).

10. Fraise à queue selon l'une quelconque des revendications 1 à 9, **caractérisée en ce que** les angles d'inclinaison (WD) des tranchants périphériques (28) individuels sont égaux.

11. Fraise à queue selon l'une quelconque des revendications 1 à 9, **caractérisée en ce que** les angles d'inclinaison (WD) des tranchants périphériques (28-1, 28-3) associés aux premier et second tranchants frontaux (24-1, 24-3) sont différents.

12. Fraise à queue selon la revendication 11, **caractérisée en ce que** les angles d'inclinaison (WD) des tranchants périphériques (28-2, 28-4) associés aux autres tranchants frontaux (24-2, 24-4) se distinguent d'au moins un des angles d'inclinaison qui est associé aux tranchants périphériques (28-1, 28-3) associés aux premier et second tranchants frontaux (24-1, 24-3).

13. Fraise à queue selon l'une quelconque des revendications 1 à 12, **caractérisée en ce que** les tranchants frontaux (24-1 à 24-4) sont corrigés par une pointe (38, 40) du coeur de fraise.

14. Fraise à queue selon l'une quelconque des revendications 1 à 13, **caractérisée en ce que** les tranchants frontaux (24-1 à 24-4) présentent, jusque dans la zone du centre de fraise, un angle de dégagement positif qui se trouve dans la plage entre 0° et 3°.

15. Fraise à queue selon l'une quelconque des revendications 1 à 14, **caractérisée en ce qu'**elle se compose, au moins dans la zone d'une section de coupe, d'un matériau dur, en particulier d'un matériau complètement dur (VHM).

16. Fraise à queue selon l'une quelconque des revendications 1 à 15, **caractérisée en ce qu'**elle est équipée, au moins dans la zone d'une section de coupe, d'un revêtement, en particulier d'un revêtement PVD.

17. Utilisation de la fraise à queue selon l'une quelconque des revendications 1 à 16 pour le pilotage et le surfaçage, en particulier de surfaces de pièce (22) inclinées par rapport à l'axe de fraise.
